# FASCICULE DE BREVET EUROPEEN

(11) **EP 2 594 069 B1**
(45) Date de publication et mention de la délivrance du brevet: **20.11.2013**
(21) Numéro de dépôt: 08830358.1
(22) Date de dépôt: 31.07.2008
(51) Int. Cl.: H04N 7/173, H04N 21/2383, H04N 21/436, H04N 21/438, H04N 21/41

(54) **PROCÉDÉ DE DIFFUSION DE SÉQUENCES DE DONNÉES VIDÉO PAR UN SERVEUR VERS UN TERMINAL CLIENT**
VERFAHREN ZUM SENDEN VON VIDEODATENFOLGEN DURCH EINEN SERVER ZU EINEM TEILNEHMERANSCHLUSSGERÄT
METHOD FOR BROADCASTING VIDEO DATA SEQUENCES BY A SERVER TO A CLIENT TERMINAL

(30) Priorité: 10.09.2007 FR 0757469
(43) Date de publication de la demande: 22.05.2013
(73) Titulaire: Sagemcom Broadband SAS, 92500 Rueil Malmaison (FR)
(72) Inventeur: MORARD, Jean-Pierre, F-75015 Paris (FR); VIALLE, Stéphane, F-57070 Metz (FR); PIETQUIN, Olivier, F-57340 Brulange (FR); GALTIER, Virginie, F-54000 Nancy (FR)
(74) Mandataire: Lebkiri, Alexandre
(86) Numéro de dépôt international: PCT/FR2008/051447
(87) Numéro de publication internationale: WO 2009/034275

(56) Documents cités:
- EP-A- 1 821 490
- KAPLINSKY K V: "VNC tight encoder - data compression for VNC" MODERN TECHNIQUES AND TECHNOLOGY, 2001. MTT 2001. PROCEEDINGS OF THE 7 TH INTERNATIONAL SCIENTIFIC AND PRACTICAL CONFERENCE OF STUDENTS, POST 20010226; 20010226 - 20010302 PISCATAWAY, NJ, USA,IEEE, 26 février 2001 (2001-02-26), pages 155-157, XP010577318 ISBN: 978-0-7803-6346-5

## Description

### Domaine technique de l'invention

La présente invention concerne un procédé de diffusion de séquences de données vidéo par un serveur vers un terminal client via un réseau. Le marché des réseaux vidéo domestiques est en plein essor. A ce titre, la multiplicité des médias au sein même des foyers ouvre de nombreuses possibilités. La présence d'un réseau ouvre la possibilité de connecter entre eux différents médias d'un même foyer (« home networking » en anglais). Un tel réseau se présente sous la forme d'un serveur (par exemple un ordinateur personnel ou PC) et de terminaux clients (par exemple un décodeur vidéo) reliés entre eux via ledit réseau en utilisant par exemple une technologie du type HDMI (« High Définition Multimedia Interface » en anglais), WIFI, Ethernet ou CPL (Courant Porteur en Ligne).

### Arrière-plan technologique de l'invention

Une telle architecture permet en créant un bureau d'offrir depuis un PC serveur agissant comme un centre média ou « Media Center » en anglais (Système matériel dont la fonction est la lecture de fichiers multimédias : vidéo, son, image, son) des services à un terminal distant. Un tel bureau comporte une présentation sur un écran formant une interface utilisateur du terminal client, d'un menu permettant à un utilisateur d'effectuer une commande. Ce bureau est géré par le serveur mais commandé à distance par le terminal client via le réseau. Ce type d'architecture permet de fonctionner avec des terminaux ne disposant pas nécessairement de ressources en calcul importantes (on a ainsi des terminaux à plus bas coût), la majorité des applications étant déportées et supportés par le serveur qui transmet les données traitées au terminal.

Un centre média comporte un organe de commande et un organe d'action pour tenir compte de la commande. Typiquement, l'organe de commande peut inclure un affichage sur un écran, par exemple celui du bureau, de boutons de contrôle. Cet organe de commande comporte un dispositif, par exemple une télécommande, pour enclencher les boutons de contrôle affichés. L'organe d'action du centre média gère les actions engendrées par l'enclenchement des boutons affichés, par exemple le fait de monter le son ou encore de passer d'une séquence vidéo à une autre via un changement d'état.

Un tel centre média peut par exemple être affiché sur un écran de télévision ou sur un autre moyen d'affichage formant une interface utilisateur. L'utilisateur peut interagir avec les données affichées par exemple à l'aide de la télécommande.

La gestion d'un centre média par un utilisateur se fait au niveau du terminal client. Une interface utilisateur peut se définir comme un arbre de commandes possibles pour l'utilisateur. Ainsi, l'utilisateur interagit avec cette interface utilisateur en donnant des ordres d'exécution, à l'aide de la télécommande par exemple, parmi des choix possibles affichés par l'interface utilisateur. Ces ordres sont reçus par le terminal client et entraînent la création d'interactions utilisateurs par le terminal client. On désignera par la suite indifféremment le terme interaction utilisateur par événement utilisateur.

Suite à la création d'un événement utilisateur (action sur un bouton de la télécommande par exemple), le terminal client envoie une requête au serveur afin de faire traiter ledit événement. C'est le serveur qui, en traitant la requête envoyée par le terminal client, traite l'ordre de l'utilisateur. Une fois la requête traitée, le serveur envoie une réponse à cette requête au terminal client. La réponse du serveur est produite par le traitement de l'événement utilisateur et notamment par un encodage des données vidéo à diffuser par le terminal client suite à l'événement utilisateur. Cette réponse est reçue et est décodée par le terminal client qui affiche le résultat du traitement sur l'interface utilisateur.

Dans un tel système, le serveur encode, c'est-à-dire compresse, ce qu'il diffuse avant de l'envoyer au terminal. Si le serveur avait à afficher sur un écran qui lui est propre les images qu'il diffuse, il ne lui serait pas nécessaire de les compresser. Les organes de transfert dans le bus interne de la machine serveur supportent en effet un débit élevé. Pour compresser, le serveur effectue une capture de son propre affichage, l'encode et l'envoie au terminal client, par exemple à une adresse IP du terminal client pour un réseau Ethernet. L'encodage est donc effectué à partir d'une image définie séquentiellement point par point, dite au format bitmap. Une telle image définie séquentiellement point par point est bien adaptée à un affichage sur un moniteur.

L'encodage effectué par le serveur est du type spatio-temporel (par exemple selon la norme H264); un encodage spatio-temporel n'encode intégralement qu'une partie des images à transmettre afin de reconstituer une vidéo. La norme H264 est une norme de codage vidéo développée conjointement par le VCEG (« Vidéo Coding Experts Group ») et le MPEG (« Moving Pictures Experts Group »). Cette norme permet d'encoder des flux vidéo avec un débit inférieur à deux fois moins que celui obtenu par la norme MPEG2 pour la même qualité et de transmettre des données à haut débit sur une liaison simplifiée, par exemple HDMI. Lors de l'encodage, une image est découpée en macroblocs unitaires et chaque macrobloc est encodé. Un encodage spatio-temporel n'encode intégralement qu'une partie des images à transmettre afin de reconstituer une vidéo. On retrouve dans la norme H264 les types d'image connus et définis dans la norme MPEG2, à savoir :
- les images I (Intra) dont le codage ne dépend d'aucune autre image,
- les images P (Prédictives) dont le codage dépend d'images reçues précédemment,
- les images B (Bi-prédictives) qui dépendent d'images reçues précédemment et/ou postérieurement.

En réception, le terminal client doit décoder les données vidéo envoyées par le serveur. Le décodage de ces données par le client est généralement effectué par un circuit électronique dédié d'une carte graphique du terminal. Une fois les données décodées, le terminal les diffuse via ses moyens de diffusion sur l'écran.

Cependant l'encodage des données par le serveur demande une puissance importante. De plus l'encodage demande généralement un temps de réalisation ne permettant pas un encodage, un envoi et décodage en temps réel. Ainsi l'encodage demande au dispositif serveur typiquement cinq fois plus de puissance que n'en demande le décodage au dispositif client.

Les média center actuels contiennent un grand nombre d'animations. Ces animations sont par exemple le résultat d'un clic de l'utilisateur, une animation sur un bouton, un fond d'écran en mouvement récurent ou encore tout simplement le déplacement d'une fenêtre. Un grand nombre de ces animations ont lieu à la suite d'événement utilisateurs. Ces animations sont en fait de petites séquences vidéo que le serveur doit encoder et transmettre au dispositif client afin d'être diffusée via l'interface utilisateur. Cependant, suite à de tels événements utilisateurs, ce n'est qu'une partie de ce qui est affiché par le dispositif serveur qui subit des modifications. En effet, par exemple pour un menu se déroulant suite à un clic utilisateur sur un bouton de ce menu, seule la partie où le menu se déroule change, le reste de l'image restant fixe. Actuellement, les protocoles vidéo n'encodent que des images entières, c'est à dire ce qui à changé suite à l'événement utilisateur ainsi que ce qui n'a pas changé. Même si, depuis le codage selon la norme H264, seules les parties ayant changées sont finalement insérées dans le flux vidéo, cet effort pour déterminer les parties ayants changées ou pas ralentit fortement le temps d'encodage des données vidéo à transférer.

Lors de test, concluants quant à la fonction principale d'affichage et de gestion à distance, le temps d'affichage s'est avéré excessivement long. Ce temps d'affichage était de l'ordre quelques secondes pour une seule image haute définition, ne permettant pas l'utilisation de cette fonction en l'état.

Ce temps d'affichage excessivement long s'explique par deux facteurs. Premièrement le temps de transmission sur la liaison IP et deuxièmement la durée du traitement des messages de requête. Le décodage des images au niveau du dispositif client est d'autant plus long que les données à décoder sont compressées. De même, l'encodage est d'autant plus long que le format de compression est complexe. Actuellement, pour faire du décodage graphique avec ce genre d'applications, le décodeur doit intégrer une librairie graphique permettant la décompression des données vidéo compressées.

Une solution connue de l'homme du métier pour résoudre les problèmes liés au temps de transmission des données via un réseau consiste à réduire la taille des données transitant par le dispositif réseau. Ainsi en compressant les données suivant les normes de compression connues on obtient des informations moins coûteuses en espace disque. Ces informations compressées transitent donc plus vite via le réseau. Cependant une telle solution rend la compression des données vidéo plus complexe encore et augmente donc le temps d'encodage par le serveur. Par ailleurs, cette complexité dans la compression augmente aussi le temps nécessaire au dispositif client pour décoder les données reçues. De plus cette solution impose l'intégration de la librairie correspondante dans le dispositif client. Cette solution apporte donc l'avantage de réduire le temps de transfert des données par le réseau mais augmente considérablement le temps de traitement des données au niveau du serveur et au niveau du client.

Une solution pour réduire le temps d'encodage et de décodage est de simplifier les informations à transmettre. Ainsi en utilisant un encodage simple, on obtient un temps d'encodage et de décodage efficace. Cependant un problème généralement lié à une transmission ayant un encodage simple est le temps de transfert des données. En effet, généralement, plus l'encodage est simple plus l'espace disque occupé par les données est important. Ainsi le temps gagné au niveau de l'encodage et du décodage est perdu au niveau du temps de transfert des informations via le réseau.

En combinant une application du type client/serveur VNC (VNC est l'abréviation de « Virtual Network Computing » que l'on peut traduire par « Utilisation virtuelle d'un ordinateur à travers un réseau ») avec le protocole H264 au niveau de la capture d'écran, par exemple, le problème d'un encodage complet des images entières peut être résolu. Par exemple, TightVNC est une application permettant d'accéder à distance à un ordinateur serveur depuis n'importe quel ordinateur client connecté à Internet. Ainsi toutes les fonctions de détection de mouvement, de calcul des images etc. sont calculées par la bibliothèque H264. Une image entière de l'écran dans la vidéo est alors envoyée comportant uniquement les changements, cette image ayant un taux de compression élevé. Enfin, le serveur VNC ne gère plus que les événements et ne fait plus d'analyse de l'image.

Cependant, avec une telle méthode, il est nécessaire de reprendre totalement l'architecture du code de l'application TightVNC serveur. Par ailleurs, la durée d'encodage risque d'être relativement longue au niveau du dispositif serveur. Avec un dispositif serveur ayant un processeur bi-coeur à 2,8 GHz l'encodage, avec les options au minimum, dure plus d'un dixième de secondes par image en résolution 352*288 pour un bitrate (débit binaire) à 30.0 Hz de 150 kilo octets par secondes. Une telle méthode prendrait donc de l'ordre de la seconde pour encoder une image ayant une résolution de 1280 par 720 pour lire de la vidéo VNC.

Le document D1 : EP-A-1 821 490 (2007-08-2) décrit une solution au problème de comment améliorer l'utilisation de la bande passante. Ladite solution propose de mémoriser les commandes et compresser celles qui sont utilisées le plus souvent.

Aucune de ces solutions ne semble donc résoudre efficacement le problème de gestion du transfert des données vidéo a une vitesse acceptable dans un dispositif réseau.

### Description générale de l'invention

Dans ce contexte, la présente invention vise à fournir un procédé de diffusion de séquences de données vidéo par un serveur vers un terminal client permettant de s'affranchir des problèmes précités en résolvant efficacement le problème de gestion du transfert des données vidéo a une vitesse acceptable dans un dispositif réseau.

A cette fin, l'invention propose un procédé de diffusion de séquences de données vidéo par un serveur vers un terminal client via un réseau comportant les étapes suivantes :
- génération d'une requête par ledit terminal client suite à un événement,
- envoi de ladite requête vers ledit serveur, ladite requête comportant un ordre de diffusion d'une séquence vidéo vers ledit terminal client, ladite séquence vidéo formant une transition entre un état courant, dit état père, et un état suivant, dit état fils, chaque état étant associé à une image finale statique et ledit serveur comportant des moyens de mémorisation aptes à stocker :
   ○ un identifiant de chaque état,
   ○ une table de transitions partant de chaque état,
   ○ des données compressées correspondant à une séquence vidéo associée à une transition d'un état vers un autre,
- vérification par ledit serveur que ledit état fils associé au dit ordre de diffusion est un état connu dans ladite table des transitions partant dudit état père,
- si ledit état fils est un état connu dudit serveur et si les données compressées stockées dans lesdits moyens de mémorisation et correspondant à la séquence vidéo associée à la transition dudit état père vers ledit état fils sont disponibles : diffusion par ledit serveur vers ledit terminal desdites données compressées,
- si ledit état fils est un état connu dudit serveur et si les données compressées stockées dans lesdits moyens de mémorisation et correspondant à la séquence vidéo ne sont pas disponibles : diffusion par ledit serveur vers ledit terminal d'au moins la dernière image de ladite séquence vidéo associée à la transition dudit état père vers ledit état fils,
- si ledit état fils n'est pas un état connu dudit serveur : diffusion par ledit serveur vers ledit terminal d'au moins la dernière image de ladite séquence vidéo associée à la transition dudit état père vers ledit état fils.

On désigne par le terme événement tout type d'événement : il peut s'agir bien entendu d'un événement provoqué par l'utilisateur (action sur un bouton d'une télécommande par exemple) mais également d'un événement système (perte de connexion- événement logiciel ou réseau - application venant perturber l'affichage par exemple).

Grâce à l'invention, on évite de re-compresser systématiquement les flux vidéo déjà envoyés : on utilise avantageusement les moyens de mémorisation du serveur tels qu'une mémoire cache qui conserve les données compressées ainsi qu'une table de transition indiquant toutes les transitions ayant déjà eu lieu à partir d'un état (état père). Un tel procédé permet une meilleure fluidité du flux vidéo et une réduction de la consommation d'énergie et des ressources.

Ainsi, le serveur vérifie dans un premier temps si l'état fils est connu ; il convient en effet de noter qu'il est possible de passer d'un état père vers plusieurs états différents : citons à titre d'exemple le cas d'une sortie d'application (« Exit » en anglais). Dans ce cas, il est fréquent que l'état suivant soit l'état correspondant à l'image précédente visualisée par l'utilisateur avant d'entrer dans l'application : cette image précédente n'est bien entendu pas toujours la même.

L'invention prévoit que si la requête envoyée par le terminal client n'a jamais été traitée par le passé, le serveur envoie a minima une réponse rapide au dispositif client comportant l'image finale de la séquence attendue par l'utilisateur : il s'agit là d'un mode dégradé offrant un résultat satisfaisant à l'utilisateur.

Afin de réduire sensiblement la tâche d'encodage du serveur, l'invention prévoit d'utiliser la mémoire cache du serveur afin de conserver les séquences vidéo ayant déjà été encodée précédemment. Si les données compressées stockées dans la mémoire cache et correspondant à la séquence vidéo sont disponibles, le serveur les diffuse vers le terminal client. On entend par données disponibles, soit le fait que les données sont déjà stockées entièrement dans la mémoire cache, soit le fait que le temps nécessaire pour achever la compression de ces données au niveau du serveur est inférieur au temps qu'il faut pour jouer lesdites données au niveau du terminal client.

Le procédé selon l'invention peut également présenter une ou plusieurs des caractéristiques ci-dessous, considérées individuellement ou selon toutes les combinaisons techniquement possibles.

Avantageusement, lesdits moyens de mémorisation incluent une mémoire tampon agissant en tant que file d'attente apte à recevoir lesdites séquences vidéo avant leur compression, le procédé selon l'invention comportant les étapes suivantes :
- si ledit état fils est un état connu dudit serveur et si les données compressées stockées dans lesdits moyens de mémorisation et correspondant à la compression de la séquence vidéo associée à la transition dudit état père vers ledit état fils ne sont pas disponibles : vérification par le serveur dans ladite file d'attente si ladite séquence vidéo est présente,
- si ladite séquence vidéo est dans ladite file d'attente : diffusion par ledit serveur vers ledit terminal de la dernière image de ladite séquence vidéo associée à la transition dudit état père vers ledit état fils,
- si ladite séquence vidéo n'est pas dans ladite file d'attente : mise de ladite séquence dans la file d'attente en vue de sa compression et diffusion par ledit serveur vers ledit terminal de la dernière image de ladite séquence vidéo associée à la transition dudit état père vers ledit état fils.

Avantageusement, lesdits moyens de mémorisation sont aptes à stocker un index de l'image finale de chaque état, le procédé comportant les étapes suivantes :
- si ledit état fils est un état connu dudit serveur : calcul d'un index associé à l'image finale de ladite séquence vidéo et comparaison de cet index calculé avec l'index de l'image finale de l'état fils stocké dans lesdits moyens de mémorisation,
- si les deux index sont différents : mise à jour de l'index enregistré de l'image finale et suppression de toutes les données compressées et associées à des séquences de transition qui arrivent et qui partent de cet état fils.

Avantageusement, le procédé selon l'invention comporte l'étape suivante : si ledit état fils n'est pas un état connu dudit serveur : création d'une nouvelle transition entre ledit état père et ledit état fils, ladite transition étant stockée dans lesdits moyens de mémorisation sans modification dudit état fils.

Selon un premier mode de réalisation, lesdits moyens de mémorisation sont aptes à stocker un index de l'image finale de chaque état, le procédé selon l'invention comportant les étapes suivantes :
- si ledit état fils n'est pas un état connu dudit serveur : calcul d'un index associé à l'image finale de ladite séquence vidéo et vérification par ledit serveur que ledit index est un index stocké dans lesdits moyens de mémorisation,
- si ledit index calculé est connu dudit serveur : création d'une nouvelle transition entre ledit état père et ledit état fils, ladite transition étant stockée dans lesdits moyens de mémorisation sans modification dudit état fils,
- si ledit index calculé n'est pas connu dudit serveur : création d'un nouvel état et d'une nouvelle transition entre ledit état père et ledit état fils, l'identifiant dudit nouvel état et ladite transition étant stockée dans lesdits moyens de mémorisation.

De manière préférentielle, lesdits moyens de mémorisation incluent une mémoire tampon agissant en tant que file d'attente apte à recevoir lesdites séquences vidéo avant leur compression, le procédé selon l'invention comportant les étapes suivantes :
- si ledit état fils n'est pas un état connu dudit serveur : calcul de la taille de ladite séquence vidéo à diffuser,
- si la taille de ladite séquence vidéo est inférieure à un seuil prédéterminé et si ladite séquence vidéo n'est pas déjà dans ladite file d'attente ou en cours de compression: compression de ladite séquence vidéo et diffusion par ledit serveur vers ledit terminal des données compressées associées à ladite séquence vidéo en supplément de la diffusion de la dernière image de ladite séquence vidéo associée à la transition dudit état père vers ledit état fils,
- si la taille de ladite séquence vidéo est supérieure au dit seuil prédéterminé et si ladite séquence vidéo n'est pas dans ladite file d'attente ou en cours de compression: mise de ladite séquence dans la file d'attente en vue de sa compression et diffusion par ledit serveur vers ledit terminal de la dernière image de ladite séquence vidéo associée à la transition dudit état père vers ledit état fils.

Selon un second mode de réalisation, lesdits moyens de mémorisation sont aptes à stocker un index de l'image finale de chaque état et incluent une mémoire tampon agissant en tant que file d'attente apte à recevoir lesdites séquences vidéo avant leur compression, ledit état fils associé à la création d'une nouvelle transition entre ledit état père et ledit état fils prenant dans un premier temps une valeur quelconque, le procédé selon l'invention comportant ensuite les étapes suivantes :
- calcul de la taille de ladite séquence vidéo à diffuser,
- si la taille de ladite séquence vidéo est inférieure à un seuil prédéterminé et si ladite séquence vidéo n'est pas déjà dans ladite file d'attente ou en cours de compression: compression de ladite séquence vidéo et diffusion par ledit serveur vers ledit terminal des données compressées associées à ladite séquence vidéo en supplément de la diffusion de la dernière image de ladite séquence vidéo associée à la transition dudit état père vers ledit état fils,
- si la taille de ladite séquence vidéo est supérieure au dit seuil prédéterminé et si ladite séquence vidéo n'est pas dans ladite file d'attente ou en cours de compression: mise de ladite séquence dans la file d'attente en vue de sa compression et diffusion par ledit serveur vers ledit terminal de la dernière image de ladite séquence vidéo associée à la transition dudit état père vers ledit état fils,
- calcul d'un index associé à l'image finale de ladite séquence vidéo et vérification par ledit serveur que ledit index est un index stocké dans lesdits moyens de mémorisation,
- si ledit index calculé est connu dudit serveur : mise à jour de la valeur dudit état fils quelconque, la transition de l'état père vers l'état fils mis à jour étant stockée dans lesdits moyens de mémorisation sans modification dudit état fils,
- si ledit index calculé n'est pas connu dudit serveur : mise à jour de la valeur dudit état fils quelconque et création d'un nouvel état fils, l'identifiant dudit nouvel état et la transition entre l'état père et l'état étant stockée dans lesdits moyens de mémorisation.

Selon une première variante, lesdits moyens de mémorisation sont aptes à stocker une variable indiquant la date de la dernière utilisation des données compressées stockées, le procédé selon l'invention comportant une étape de libération de place dans lesdits moyens de mémorisation, ladite étape de libération étant réalisée en supprimant prioritairement les données compressées présentant la date de dernière utilisation la plus ancienne.

Selon une deuxième variante, le procédé selon l'invention comporte une étape de libération de place dans lesdits moyens de mémorisation, ladite étape de libération étant réalisée en fonction du temps nécessaire à la compression des données compressées stockées dans lesdits moyens de mémorisation.

Une partie des données compressées peut être stockée dans des moyens de mémorisation localisés dans ledit terminal client.

La compression des données par ledit serveur peut se faire selon la norme H264.

La compression des données peut ne se faire que sur des zones modifiées des images des séquences vidéo.

### Brève description des figures

D'autres caractéristiques et avantages de l'invention ressortiront clairement de la description qui en est donnée ci-dessous, à titre indicatif et nullement limitatif, en référence aux figures annexées :
- la figure 1 est une représentation schématique simplifiée d'une configuration en réseau pour la mise en oeuvre du procédé de diffusion selon l'invention,
- la figure 2 illustre les différentes étapes du procédé selon l'invention,
- la figure 3 illustre les différentes étapes de la gestion de l'avancement de la compression utilisée dans le procédé selon l'invention,
- la figure 4 illustre les différentes étapes de la gestion des séquences vidéo selon leur taille utilisée dans le procédé selon l'invention.

Dans toutes les figures, les éléments communs portent les mêmes numéros de référence.

### Description des formes de réalisation préférées de l'invention

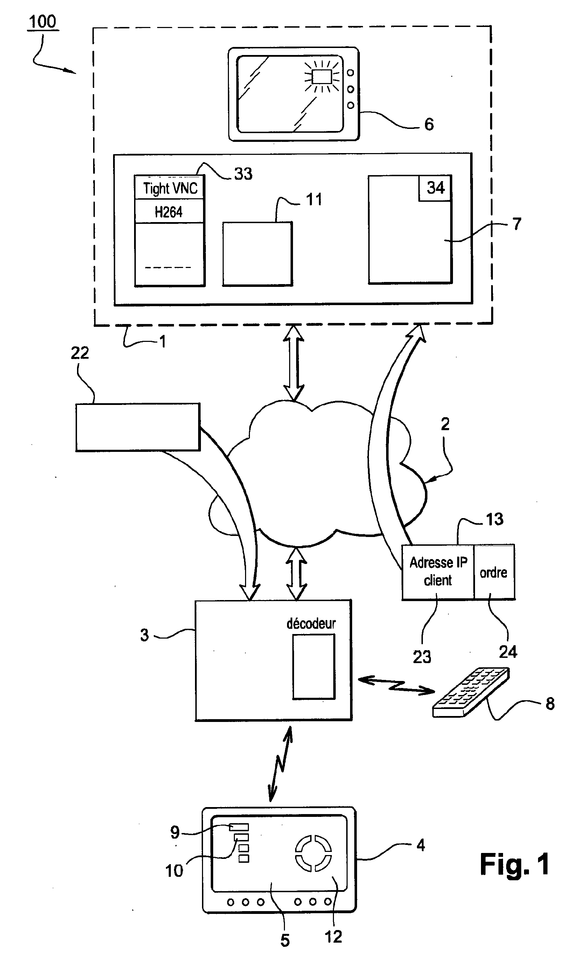

La figure 1 est une représentation schématique simplifiée d'une configuration 100 en réseau pour la mise en oeuvre du procédé de diffusion selon l'invention. Une telle configuration 100 comporte :
- un serveur 1 relié via un réseau 2 à un terminal client 3,
- un moyen 4 de diffusion d'une interface utilisateur 5,
- une télécommande 8.

Le serveur 1 est par exemple un ordinateur et le terminal client 3 est par exemple un décodeur de télévision numérique. Le réseau 2 permet de faire circuler entre le serveur 1 et le terminal client 3 des données vidéo (plus généralement des données vidéo/audio). Le moyen 4 de diffusion est par exemple un téléviseur.

Le serveur 1 comporte :
- son propre moyen 6 de diffusion, par exemple un moniteur d'ordinateur,
- une mémoire 7 du type mémoire cache,
- une mémoire tampon 11 du type file d'attente,
- une mémoire de programme 33 incluant notamment:
   ○ un compresseur utilisant un encodage du type H264, MPEG2, MPEG...
   ○ une application du type TightVNC.

L'utilisateur peut interagir avec l'interface utilisateur 5 par l'intermédiaire de la télécommande 8. Ces interactions (ou événements) utilisateur sont reçues par le terminal client 3 qui transmet au serveur 1 la requête 13 engendrée par ces événements utilisateur ; dès que le message de requête 13 a été créé par le terminal client 3, ce dernier l'envoie au serveur 1. Les messages de requête 13 circulent via le réseau 2 entre le terminal 3 et le serveur 1.

Les messages 13 de requête envoyés par le terminal client 3 comportent différentes informations. Ces informations permettent au serveur 1 de traiter les données contenues dans ce message 13 et d'envoyer un message 22 de réponse au terminal client 3. Nous reviendrons sur le contenu de ce message 22 par la suite. Un message 13 de requête comporte l'adresse 23 à laquelle le serveur 1 doit répondre, typiquement l'adresse IP du terminal 3 et un ordre 24 à exécuter suite à un événement utilisateur.

Lors de l'événement utilisateur entraînant une animation, le serveur 1 peut encoder séparément une animation et un masque ; le masque correspond au fond de l'image qui reste fixe durant l'animation. En combinant, par exemple, l'application TightVNC avec le protocole H264 au niveau de la fonction d'envoi, le serveur 1 envoie uniquement les parties ayant changé suite à un événement utilisateur ainsi que la position où il faut placer cette séquence. Cette séparation de l'encodage permet de ne pas avoir à encoder l'intégralité de l'image à afficher lors de l'animation. Le serveur 1 n'encode alors que l'animation seule sans réencoder, pour chaque image d'un affichage comportant une animation, la totalité de l'image à chaque affichage.

Les données vidéo reçues par le terminal client 3 sont restituées par le terminal 3 de manière événementielle, c'est-à-dire que le terminal client 3 permet à l'utilisateur de naviguer suivant un arbre d'événements possibles. Par exemple, l'interface utilisateur 5 peut se présenter sous la forme d'un menu 9 dans lequel l'utilisateur navigue en enclenchant des boutons 10 du menu 9 à l'aide de la télécommande 8. L'enclenchement de tels boutons 10 qui forme un événement peut se traduire sous la forme d'une petite animation correspondant à une séquence vidéo. Ces animations peuvent être par exemple présentes lors de l'activation d'un bouton 10, le passage sur un bouton 10, ou encore sur un fond d'écran animé. De telles animations sont des séquences vidéo affichées en fonction des événements utilisateur. Cependant, ces animations ne modifient en général qu'une faible partie de l'image 12 affichée par l'interface utilisateur 5, le reste de l'image 12 ne subissant aucune modification.

En principe, l'événement utilisateur (action sur la télécommande 8) doit engendrer l'envoi d'une séquence vidéo.

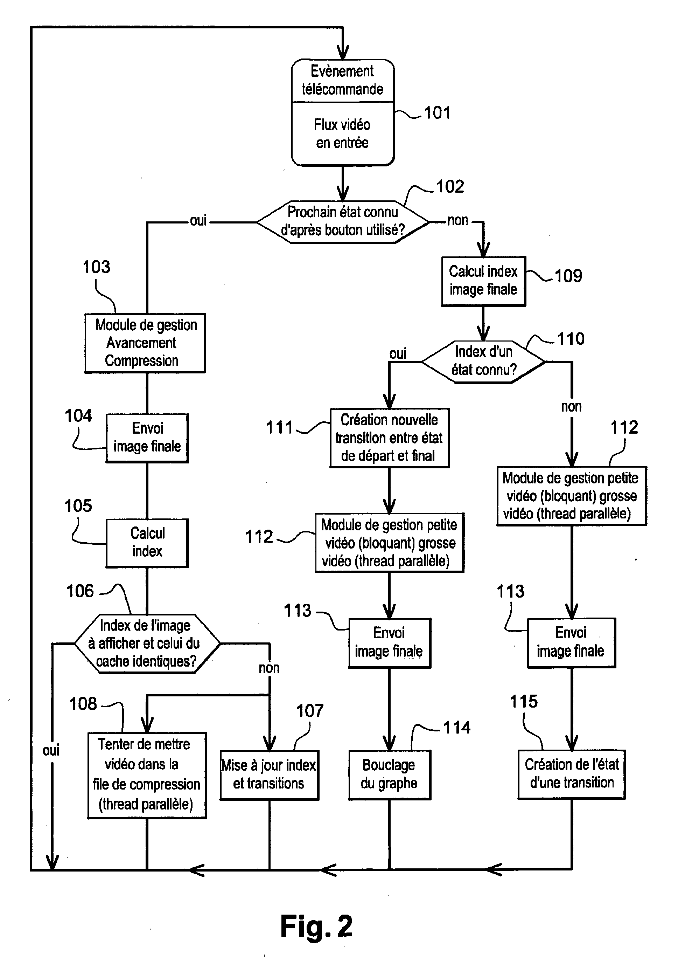

Le procédé selon l'invention utilise un automate programmé 34 situé dans la mémoire cache 7 et fonctionnant par apprentissage. Comme nous allons le voir plus précisément en référence aux figures 2 à 4, le graphe d'états de l'automate 34 va se construire au fur et à mesure : on changera d'état dès qu'un événement est déclenché (i.e. dès qu'un signal de télécommande génère une requête).

Les liens entre les états sont caractérisés par un événement utilisateur et une séquence vidéo. L'événement utilisateur correspond par exemple au signal de télécommande pour passer d'un état courant (« état père ») à un état suivant (« état fils ») et la séquence vidéo est la séquence de transition entre les deux états.

La mémoire cache 7 est apte à garder en mémoire une série d'états, chaque état étant caractérisé par :
- un numéro d'identifiant,
- une indexation de son image finale (en effet, chaque état comporte une image finale statique),
- une table des transitions connues partant de cet état

L'indexation d'une image permet d'identifier cette dernière en lui attribuant une immatriculation : le but de l'indexation est de déterminer si deux images sont différentes ou pas. Il existe de nombreuses méthodes permettant de réaliser ce type d'indexation. Citons à titre d'exemple, les méthodes par analyse de l'histogramme de couleur, par analyse de texture, par analyse de forme ou par analyse spatiale.

La mémoire cache 7 est également apte à garder en mémoire une série de transitions, chaque transition étant caractérisée par :
- des données compressées correspondant à une séquence vidéo entre deux états,
- une date de dernière utilisation.

Le procédé de diffusion de séquences de données vidéo par le serveur 1 vers le terminal client 3 via le réseau 2 comporte une première étape de génération d'une requête 13 par le terminal client 3 suite à un événement du type action sur la télécommande. La requête 13 comporte un ordre de diffusion d'une séquence vidéo vers le terminal client 3, ladite séquence vidéo formant une transition entre un état courant père et un état suivant fils.

En référence à la figure 2, selon l'étape 101, l'événement télécommande entraîne la présence d'un flux vidéo au niveau du serveur 1.

Selon l'étape 102, le serveur 1 vérifie que l'état fils associé à l'ordre de diffusion contenu dans la requête 13 est un état connu dans la table de transitions partant de l'état père (ladite table étant contenue dans la mémoire cache 7 du serveur).

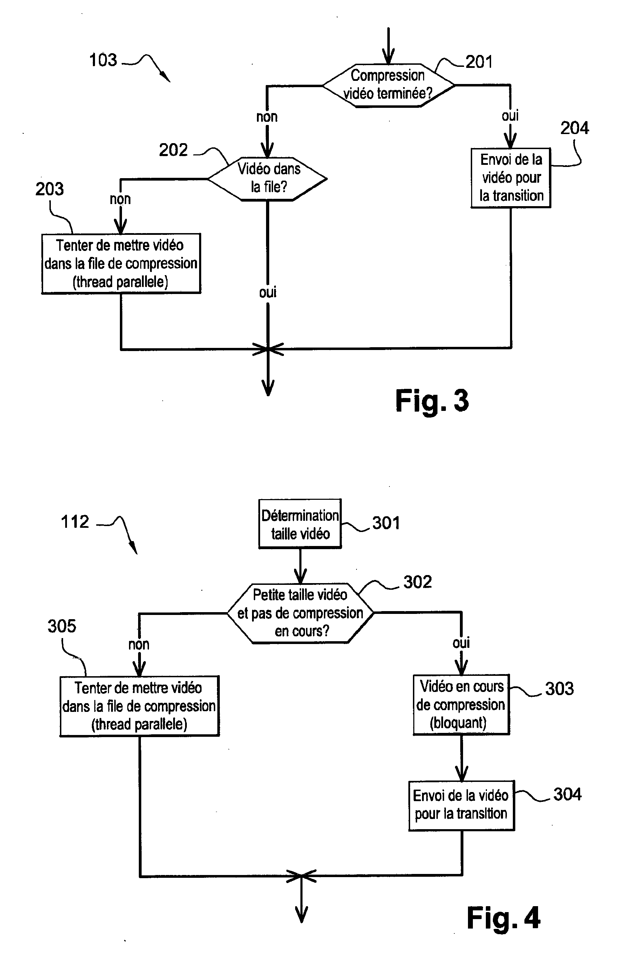

Si l'état fils est un état connu du serveur 1, on passe à l'étape 103 de gestion d'avancement de la compression : cette étape 103 est décrite plus en détails en référence à la figure 3.

Selon l'étape 201, on vérifie si les données compressées stockées dans la mémoire cache 7 et correspondant à la compression de la séquence vidéo associée à la transition de l'état père vers l'état fils sont ou non disponibles dans la mémoire cache 7. On entend par données disponibles, soit le fait que les données sont déjà stockées entièrement dans la mémoire cache 7, soit le fait que le temps nécessaire pour achever la compression de ces données au niveau du serveur 1 est inférieur au temps qu'il faut pour jouer lesdites données au niveau du terminal client 3. En d'autres termes, il se peut que les données ne soient pas totalement compressées mais qu'on commence à la diffuser vers le terminal client 3 car le temps nécessaire pour finir la compression est inférieur au temps global de lecture de la séquence.

Si les données compressées sont disponibles, selon l'étape 204, ces données correspondant à la séquence vidéo associée à la transition de l'état père vers l'état fils sont diffusées par le serveur 1 vers le terminal 3. On utilise ici avantageusement le système de mémoire cache 7 de façon à stocker des données correspondant à des transitions déjà demandées par l'utilisateur. On notera que selon l'étape 104, le serveur 1 envoie également vers le terminal 3 la dernière image de la séquence vidéo : cette image finale est celle arrivant en entrée du serveur 1.

Si les données compressées ne sont pas disponibles, on passe à une étape 202 consistant pour le serveur 1 à vérifier dans sa file d'attente 11 si la séquence vidéo est ou non présente. Les séquences vidéo sont placées dans la file d'attente 11 avant d'être encodées.

Selon l'étape 203, si la séquence vidéo n'est pas dans la file d'attente 11, on place cette séquence dans la file d'attente 11 en vue de sa compression : on passe ensuite à l'étape 104 de diffusion par le serveur 1 vers le terminal 3 de la dernière image de la séquence vidéo associée à la transition de l'état père vers l'état fils. On est donc ici dans un mode dégradé de diffusion consistant à ne transmettre à l'utilisateur que la dernière image de la séquence. On notera qu'a priori, dans la mesure où l'état fils associé à l'ordre de diffusion contenu dans la requête 13 est un état connu dans la table de transitions partant de l'état père, il serait logique que la séquence vidéo soit a minima dans la file d'attente 11 : toutefois, la séquence vidéo peut ne pas être dans la file d'attente 11 si, au moment où on a tenté de la mettre, la file d'attente 11 était pleine.

Si la séquence vidéo est dans la file d'attente 11 mais que la fin prévue de sa compression ne permet de diffuser les données compressées, on passe également directement à l'étape 104 de diffusion par le serveur 1 vers le terminal 3 de la dernière image de la séquence vidéo associée à la transition dudit état père vers ledit état fils. On est donc également en mode dégradé mais il n'est pas utile de placer la séquence vidéo dans la file d'attente 11 puisqu'elle y est déjà.

Après l'étape 104 d'envoi systématique de la dernière image de la séquence vidéo du serveur 1 vers le terminal 3, on passe à une étape 105 pendant laquelle on calcule un index de l'image finale de la séquence vidéo : selon l'étape 106, le serveur 1 compare l'index calculé avec l'index de l'image finale des données compressées et enregistrées dans la mémoire cache 7 et correspondant à la transition entre l'état père et l'état fils (il s'agit en fait de l'index de l'image finale de l'état fils stocké dans la mémoire cache 7).

Si le serveur 1 constate un changement entre les deux index, il va alors mettre à jour l'état fils (étape 107), c'est-à-dire mettre à jour l'index enregistré de l'image finale et supprimer toutes les données compressées et associées à des séquences de transition qui arrivent et qui partent de cet état (ces séquences sont considérées comme obsolètes). Selon l'étape 108, la séquence vidéo arrivée en entrée du serveur 1 est placée dans la file d'attente 11 pour être compressée. Deux points sont à noter dans le cas des étapes 107 et 108:
- il n'y a pas ici de création d'un nouvel état (pas de nouvel identifiant) mais simplement une mise à jour (en modifiant ses liens vers les autres états) de l'état ;
- ce ré-encodage oblige à conserver les données dans la mémoire cache 11 et à conserver la capture de la séquence vidéo de manière à pouvoir réencoder cette dernière au cas où elle s'avérerait obsolète. Si l'état fils n'est pas un état connu du serveur 1, on passe à l'étape 109 qui est une étape de calcul de l'index associé à l'image finale de la séquence vidéo (i.e. l'index de l'image finale de l'état fils stocké dans la mémoire cache 7).

Selon l'étape 110, le serveur 1 vérifie si l'index calculé est un index stocké dans la mémoire cache 7.

Selon l'étape 111, si l'index calculé est connu du serveur 1, le serveur 1 créé simplement une nouvelle transition entre l'état père et l'état fils, ladite transition étant stockée dans la mémoire cache 7 sans modification de l'état fils déjà existant. On est ici dans le cas d'un événement utilisateur inconnu avec un index de l'image final correspondant à l'index d'un état déjà en mémoire. On est donc en présence d'un bouclage du graphe d'états associé à l'automate 34, c'est-à-dire que plusieurs chemins possibles arrivent au même état fils et l'index de l'image finale de l'état est donc déjà connu du serveur 1.

On passe ensuite à l'étape 112 de gestion des séquences vidéo selon leur taille qui est décrite plus en détails en référence à la figure 4.

L'étape 301 consiste en une détermination de la taille de la séquence vidéo à diffuser.

Selon l'étape 302, on compare la taille de la séquence vidéo à un seuil prédéterminé et on vérifie si la séquence vidéo n'est pas déjà dans la file d'attente 11 ou en cours de compression.

Selon l'étape 303, si la taille de la séquence vidéo est inférieure au dit seuil prédéterminé et si la séquence vidéo n'est ni dans la file d'attente 11 ni en cours de compression, le serveur 1 lance la compression de la séquence vidéo de petite taille puis diffuse (étape 304) les données compressées associées à la séquence vers le terminal 3 en supplément de l'image finale de la séquence vidéo (étape 113). La condition permettant de lancer la compression de la séquence vidéo est que la lecture par l'utilisateur ne soit pas dégradée ; en d'autres termes, il est nécessaire que le temps de compression de la séquence soit inférieur au temps de - lecture de ladite séquence. L'envoi de la vidéo vers l'utilisateur selon l'étape de 304 peut bien entendu se faire au fur et à mesure de l'encodage de la séquence, l'encodage étant réalisé par GOP (« Group Of Pictures ») et les données compressées des GOP étant envoyées progressivement.

Selon l'étape 305, si la taille de la séquence vidéo est supérieure au seuil prédéterminé et si la séquence vidéo n'est pas dans ladite file d'attente ou en cours de compression, le serveur 1 met (ou tente de mettre car il se peut que la file soit pleine) la séquence dans la file d'attente 11 en vue de sa compression pour une diffusion ultérieure. Ainsi, si la vidéo est trop lourde ou si le compresseur est occupé, on inscrit une tâche de compression de la vidéo en entrée de la file de compression 11 (l'encodage se fera alors dans un « thread » parallèle ou processus léger).

Dans ce cas, en référence à l'étape 113, seule la dernière image de la séquence vidéo est diffusée par le serveur 1 vers le terminal 3.

L'intérêt de cette étape 112 de gestion en fonction de la taille de la séquence vidéo est qu'elle permet, pour des vidéos courtes, un encodage et une transmission à la volée : les opérations sont effectuées en série pour les vidéos qui le permettent (les courtes) et pas pour les autres (les longues). Le temps d'encodage des vidéos longues étant plus important, il est préférable de mettre ces vidéos dans la file d'attente 11 et de transférer rapidement la dernière image en mode dégradé. En effet, l'ergonomie serait encore plus dégradée si l'utilisateur devait attendre la fin de l'encodage pour visualiser une vidéo longue et il est préférable que l'utilisateur profite de l'encodage à la prochaine visite de la transition associée.

Comme évoqué plus haut, le fait que l'index de l'image finale corresponde à l'index d'un état en mémoire cache indique qu'on est dans le cas d'un bouclage de graphe tel qu'indiqué par l'étape 114.

Si l'index calculé n'est pas connu du serveur, on passe directement aux étapes 112 de gestion des séquences vidéo selon leur taille et 113 d'envoi de l'image finale identiques aux étapes 112 et 113 décrites plus haut.

On est ici dans le cas où l'état fils est totalement inconnu ; en effet, l'événement utilisateur est inconnu et l'index de l'image final est également inconnu. Dès lors, l'étape 115 correspond à la création d'un nouvel état fils et d'une nouvelle transition entre l'état père et l'état fils, l'identifiant du nouvel état fils et la transition étant stockée dans la mémoire cache 7.

Lorsque la mémoire cache 7 attribuée pour le stockage de l'automate 34 avec toutes les données compressées est pleine, il faut effacer les données. Une méthode possible de vidage de la mémoire cache 7 suit les règles suivantes :
- la structure de l'automate 34 est conservée, c'est-à-dire qu'aucun état n'est effacé. Seules les transitions vidéo compressées peuvent être supprimées. On part ainsi du principe que la place prise par la structure de l'automate 34 est négligeable par rapport à la taille des vidéos compressées.
- On choisit de supprimer en priorité la vidéo de transition compressée inutilisée depuis le plus longtemps ; pour cela, chaque transition possède un champ « date de dernière utilisation ». A chaque fois que l'on passe par une transition sa date de dernière utilisation est mise à jour.
- Si la taille libérée par la suppression de la vidéo la plus ancienne ne suffit pas, on cherche celle qui est à présent la plus ancienne et on l'efface à son tour. On réitère ce procédé jusqu'à ce que la place libérée soit suffisante.

Bien entendu, l'invention n'est pas limitée au mode de réalisation qui vient d'être décrit.

Notamment, l'invention a été décrite dans le cas de données vidéo mais il est entendu qu'elle s'applique également à des données vidéo/audio.

On notera ainsi qu'il est également possible d'utiliser d'autres critères pour la libération de place dans la mémoire cache ; ainsi, un autre paramètre peut être le temps d'encodage. En effet, il peut être intéressant de ne pas avoir à encoder trop souvent une séquence lourde (i.e. de taille importante). On peut donc décider de garder en priorité les séquences vidéo les plus longues à compresser ; cette manière de procéder peut évidemment aussi être associée à la prise en compte de la date de dernière utilisation.

On notera également qu'il est possible de mettre à profit la mémoire cache du terminal utilisateur qui n'a pas été utilisé dans le mode de réalisation décrit. Ainsi, une autre solution possible consiste à laisser l'automate sur le serveur, ce dernier pouvant enregistrer des données encodées à la fois sur sa propre mémoire cache mais également sur la mémoire cache du terminal.

Par ailleurs, selon le mode de réalisation décrit en référence à la figure 2, le calcul de l'index de l'image final est demandé avant le lancement de la compression. Si l'on considère la vidéo arrivant en flux temps réel (« streaming »), cette situation est susceptible d'engendrer une perte de temps puisque l'image finale se trouve à la fin de la séquence vidéo.

Selon l'invention, il est donc également possible de lancer la gestion de la compression vidéo (étape 112) avant de calculer l'index de l'image finale. En lançant la compression avant le test sur l'index, on ne sait pas vers quel état fils la transition pointe. Dès lors, une solution consiste à créer une transition avec un paramètre d'état fils fixé sur une valeur quelconque, cette valeur étant mise à jour dès qu'elle est connue.

Enfin, on pourra remplacer tout moyen par un moyen équivalent

## Revendications

1. Procédé de diffusion de séquences de données vidéo par un serveur vers un terminal client via un réseau comportant les étapes suivantes :
- génération (101) d'une requête par ledit terminal client suite à un événement,
- envoi (101) de ladite requête vers ledit serveur, ladite requête comportant un ordre de diffusion d'une séquence vidéo vers ledit terminal client, ladite séquence vidéo formant une transition entre un état courant, dit état père, et un état suivant, dit état fils, chaque état étant associé à une image finale statique et ledit serveur comportant des moyens de mémorisation aptes à stocker :
○ un identifiant de chaque état,
○ une table de transitions partant de chaque état,
○ des données compressées correspondant à une séquence vidéo associée à une transition d'un état vers un autre,
- vérification (102) par ledit serveur que ledit état fils associé au dit ordre de diffusion est un état connu dans ladite table des transitions partant dudit état père,
- si ledit état fils est un état connu dudit serveur et si les données compressées stockées dans lesdits moyens de mémorisation et correspondant à la séquence vidéo associée à la transition dudit état père vers ledit état fils sont disponibles : diffusion (103) par ledit serveur vers ledit terminal desdites données compressées,
- si ledit état fils est un état connu dudit serveur et si les données compressées stockées dans lesdits moyens de mémorisation et correspondant à la séquence vidéo ne sont pas disponibles : diffusion (104) par ledit serveur vers ledit terminal d'au moins la dernière image de ladite séquence vidéo associée à la transition dudit état père vers ledit état fils,
- si ledit état fils n'est pas un état connu dudit serveur : diffusion (113) par ledit serveur vers ledit terminal d'au moins la dernière image de ladite séquence vidéo associée à la transition dudit état père vers ledit état fils.

2. Procédé selon la revendication précédente dans lequel lesdits moyens de mémorisation incluent une mémoire tampon agissant en tant que file d'attente apte à recevoir lesdites séquences vidéo avant leur compression, ledit procédé comportant les étapes suivantes (103):
- si ledit état fils est un état connu dudit serveur et si les données compressées stockées dans lesdits moyens de mémorisation et correspondant à la compression de la séquence vidéo associée à la transition dudit état père vers ledit état fils ne sont pas disponibles (201) : vérification (202) par le serveur dans ladite file d'attente si ladite séquence vidéo est présente,
- si ladite séquence vidéo est dans ladite file d'attente : diffusion (104) par ledit serveur vers ledit terminal de la dernière image de ladite séquence vidéo associée à la transition dudit état père vers ledit état fils,
- si ladite séquence vidéo n'est pas dans ladite file d'attente : mise (203) de ladite séquence dans la file d'attente en vue de sa compression et diffusion (104) par ledit serveur vers ledit terminal de la dernière image de ladite séquence vidéo associée à la transition dudit état père vers ledit état fils.

3. Procédé selon l'une des revendications précédentes dans lequel lesdits moyens de mémorisation sont aptes à stocker un index de l'image finale de chaque état, ledit procédé comportant les étapes suivantes :
- si ledit état fils est un état connu dudit serveur : calcul (105) d'un index associé à l'image finale de ladite séquence vidéo et comparaison (106) de cet index calculé avec l'index de l'image finale de l'état fils stocké dans lesdits moyens de mémorisation,
- si les deux index sont différents : mise à jour (107) de l'index enregistré de l'image finale et suppression de toutes les données compressées et associées à des séquences de transition qui arrivent et qui partent de cet état fils.

4. Procédé selon l'une des revendications précédentes comportant l'étape suivante : si ledit état fils n'est pas un état connu dudit serveur : création d'une nouvelle transition (111, 115) entre ledit état père et ledit état fils, ladite transition étant stockée dans lesdits moyens de mémorisation sans modification dudit état fils

5. Procédé selon la revendication précédente dans lequel lesdits moyens de mémorisation sont aptes à stocker un index de l'image finale de chaque état, ledit procédé comportant les étapes suivantes :
- si ledit état fils n'est pas un état connu dudit serveur : calcul (109) d'un index associé à l'image finale de ladite séquence vidéo et vérification par ledit serveur que ledit index est un index stocké dans lesdits moyens de mémorisation,
- si ledit index calculé est connu dudit serveur : création (111) d'une nouvelle transition entre ledit état père et ledit état fils, ladite transition étant stockée dans lesdits moyens de mémorisation sans modification dudit état fils,
- si ledit index calculé n'est pas connu dudit serveur : création (115) d'un nouvel état et d'une nouvelle transition entre ledit état père et ledit état fils, l'identifiant dudit nouvel état et ladite transition étant stockée dans lesdits moyens de mémorisation.

6. Procédé selon l'une des revendications précédentes dans lequel lesdits moyens de mémorisation incluent une mémoire tampon agissant en tant que file d'attente apte à recevoir lesdites séquences vidéo avant leur compression, ledit procédé comportant les étapes suivantes (112):
- si ledit état fils n'est pas un état connu dudit serveur : calcul de la taille de ladite séquence vidéo à diffuser (301),
- si la taille de ladite séquence vidéo est inférieure à un seuil prédéterminé et si ladite séquence vidéo n'est pas déjà dans ladite file d'attente ou en cours de compression: compression (303) de ladite séquence vidéo et diffusion (304) par ledit serveur vers ledit terminal des données compressées associées à ladite séquence vidéo en supplément de la diffusion de la dernière image de ladite séquence vidéo associée à la transition dudit état père vers ledit état fils,
- si la taille de ladite séquence vidéo est supérieure au dit seuil prédéterminé et si ladite séquence vidéo n'est pas dans ladite file d'attente ou en cours de compression: mise (305) de ladite séquence dans la file d'attente en vue de sa compression et diffusion par ledit serveur vers ledit terminal de la dernière image de ladite séquence vidéo associée à la transition dudit état père vers ledit état fils.

7. Procédé selon la revendication 4 dans lequel lesdits moyens de mémorisation sont aptes à stocker un index de l'image finale de chaque état et incluent une mémoire tampon agissant en tant que file d'attente apte à recevoir lesdites séquences vidéo avant leur compression, ledit état fils associé à la création d'une nouvelle transition entre ledit état père et ledit état fils prenant dans un premier temps une valeur quelconque, ledit procédé comportant ensuite les étapes suivantes :
- calcul de la taille de ladite séquence vidéo à diffuser,
- si la taille de ladite séquence vidéo est inférieure à un seuil prédéterminé et si ladite séquence vidéo n'est pas déjà dans ladite file d'attente ou en cours de compression: compression de ladite séquence vidéo et diffusion par ledit serveur vers ledit terminal des données compressées associées à ladite séquence vidéo en supplément de la diffusion de la dernière image de ladite séquence vidéo associée à la transition dudit état père vers ledit état fils,
- si la taille de ladite séquence vidéo est supérieure au dit seuil prédéterminé et si ladite séquence vidéo n'est pas dans ladite file d'attente ou en cours de compression: mise de ladite séquence dans la file d'attente en vue de sa compression et diffusion par ledit serveur vers ledit terminal de la dernière image de ladite séquence vidéo associée à la transition dudit état père vers ledit état fils,
- calcul d'un index associé à l'image finale de ladite séquence vidéo et vérification par ledit serveur que ledit index est un index stocké dans lesdits moyens de mémorisation,
- si ledit index calculé est connu dudit serveur : mise à jour de la valeur dudit état fils quelconque, la transition de l'état père vers l'état fils mis à jour étant stockée dans lesdits moyens de mémorisation sans modification dudit état fils,
- si ledit index calculé n'est pas connu dudit serveur : mise à jour de la valeur dudit état fils quelconque et création d'un nouvel état fils, l'identifiant dudit nouvel état et la transition entre l'état père et l'état étant stockée dans lesdits moyens de mémorisation.

8. Procédé selon l'une des revendications précédentes dans lequel lesdits moyens de mémorisation sont aptes à stocker une variable indiquant la date de la dernière utilisation des données compressées stockées, ledit procédé comportant une étape de libération de place dans lesdits moyens de mémorisation, ladite étape de libération étant réalisée en supprimant prioritairement les données compressées présentant la date de dernière utilisation la plus ancienne.

9. Procédé selon l'une des revendications précédentes comportant une étape de libération de place dans lesdits moyens de mémorisation, ladite étape de libération étant réalisée en fonction du temps nécessaire à la compression des données compressées stockées dans lesdits moyens de mémorisation.

10. Procédé selon l'une des revendications précédentes **caractérisé en ce qu'**une partie des données compressées est stockée dans des moyens de mémorisations localisés dans ledit terminal client.

11. Procédé selon l'une des revendications précédentes **caractérisé en ce que** la compression des données par ledit serveur se fait selon la norme H264.

12. Procédé selon l'une des revendications précédentes **caractérisé en ce que** la compression des données ne se fait que sur des zones modifiées des images des séquences vidéo.

## Patentansprüche

1. Verfahren zur Ausstrahlung von Videodatensequenzen durch einen Server zu einem Kundenterminal über ein die folgenden Stufen umfassendes Netz:
- Generieren (101) einer Anfrage von dem genannten Kundenterminal im Anschluss an ein Ereignis,
- Versand (101) der genannten Anfrage zu dem genannten Server, wobei die genannte Anfrage einen Übertragungsbefehl einer Videosequenz auf das genannte Kundenter-minal umfasst, wobei die genannte Videosequenz einen Übergang zwischen einem ak-tuellen Zustand, bezeichnet als übergeordneter Zustand, und einem nachfolgenden Zustand, bezeichnet als untergeordneter Zustand, bildet, wobei jeder Zustand einem statischen Endbild zugeordnet ist und der genannte Server Speichermittel umfasst, die geeignet sind zum Speichern von:
○ eine Identifizierung jedes Zustandes,
○ eine von jedem Zustand ausgehende Übergangstafel,
○ komprimierte Daten, die einer Videosequenz entsprechen, die einem Übergang von einem Zustand auf einen anderen entsprechen,
- Überprüfung (102) durch den genannten Server, dass der genannte, dem genannten Übertragungsbefehl zugeordnete, untergeordnete Zustand ein in der genannten Tafel der Übergänge, von dem genannten übergeordneten Zustand ausgehender, bekannter Zustand ist,
- Wenn der genannte untergeordnete Zustand ein bekannter Zustand des genannten Servers ist und wenn die komprimierten, in den genannten Speichermitteln gespei-cherten und der dem Übergang von dem genannten übergeordneten Zustand auf den genannten untergeordneten Zustand zugeordneten Videosequenz entsprechenden Da-ten verfügbar sind: Ausstrahlung (103) durch den genannten Server auf das genannte Terminal der genannten komprimierten Daten,
- Wenn der genannte untergeordnete Zustand ein bekannter Zustand des genannten Servers ist und wenn die komprimierten, in den genannten Speichermitteln gespei-cherten und der Videosequenz entsprechenden Daten nicht verfügbar sind: Ausstrah-lung (104) durch den genannten Server auf das genannte Terminal von wenigstens dem letzten Bild der genannten, dem Übergang von dem genannten übergeordneten Zustand auf den genannten untergeordneten Zustand zugeordneten Videosequenz,
- Wenn der genannte untergeordnete Zustand kein bekannter Zustand des genannten Servers ist: Ausstrahlung (113) durch den genannten Server auf das genannte Terminal wenigstens des letzten Bildes der genannten, dem Übergang von dem genannten übergeordneten Zustand auf den genannten untergeordneten Zustand zugeordneten Videosequenz.

2. Verfahren gemäß dem voranstehenden Anspruch, bei dem die genannten Spei-chermittel einen Pufferspeicher beinhalten, der als Warteschlange wirkt, die geeignet ist, um die genannten Videosequenzen vor ihrem Komprimieren zu empfangen, wobei das genannte Verfahren die folgenden Stufen (103) umfasst:
- Wenn der genannte untergeordnete Zustand ein bekannter Zustand des genannten Servers ist und wenn die komprimierten, in den genannten Speichermitteln gespei-cherten und der Komprimierung der dem Übergang von dem genannten übergeordne-ten Zustand auf den genannten untergeordneten Zustand zugeordneten Videosequenz entsprechenden Daten nicht verfügbar sind (201): Überprüfung (202) durch den Server in der genannten Warteschlange, ob die genannte Videosequenz vorhanden ist,
- Wenn die genannte Videosequenz sich in der genannten Warteschlange befindet: Aus-strahlung (104) durch den genannten Server auf das genannte Termin des letzten Bil-des der genannten, dem Übergang von dem genannten übergeordneten Zustand auf den genannten untergeordneten Zustand zugeordneten Videosequenz,
- Wenn die genannte Videosequenz sich nicht in der genannten Warteschlange befindet: Einstellen (203) der genannten Sequenz in die Warteschlange zwecks ihrer Komprimie-rung und ihrer Ausstrahlung (104) durch den genannten Server zu dem genannten Terminal des letzten Bildes der genannten, dem Übergang von dem genannten über-geordneten Zustand zu dem genannten untergeordneten Zustand zugeordneten Vi-deosequenz.

3. Verfahren gemäß einem der voranstehenden Ansprüche, bei dem die genannten Speichermittel geeignet sind, einen Index des Endbildes jedes Zustandes zu speichern, wobei das genannte Verfahren die folgenden Stufen umfasst:
- Wenn der genannte untergeordnete Zustand des genannten Servers bekannt ist: Be-rechnung (105) eines dem Endbild der genannten Videosequenz zugeordneten Indexes und Vergleich (106) dieses berechneten Indexes mit dem Endbild des in den genannten Speichermitteln gespeicherten untergeordneten Zustandes,
- Wenn die zwei Indexe unterschiedlich sind: Aktualisierung (107) des aufgezeichneten Indexes des Endbildes und Löschen aller komprimierter und den Übergangssequenzen zugeordneter Daten, die von diesem untergeordneten Zustand eintreffen und von ihm ausgehen.

4. Verfahren gemäß einem der voranstehenden Ansprüche, umfassend die folgende Stufe: Wenn der genannte untergeordnete Zustand kein bekannter Zustand des genannten Servers ist: Herstellung eines neuen Übergangs (111, 115) zwischen dem genannten übergeordneten Zustand und dem genannten untergeordneten Zustand, wobei der genannte Über-gang in den genannten Speichermitteln ohne Änderung des genannten untergeordneten Zu-stands gespeichert sind.

5. Verfahren gemäß dem voranstehenden Anspruch, bei dem die genannten Spei-chermittel geeignet sind, um einen Index des Endbildes jedes Zustandes zu speichern, wobei das genannte Verfahren die folgenden Stufen umfasst:
- Wenn der genannte untergeordnete Zustand kein bekannter Zustand des genannten Servers ist: Berechnung (109) eines dem Endbild der genannten Videosequenz zuge-ordneten Indexes und Überprüfung durch den genannten Server, dass der genannte Index ein in den genannten Speichermitteln gespeicherter Index ist,
- Wenn der genannte berechnete Index dem genannten Server bekannt ist: Herstellung (111) eines neuen Übergangs zwischen dem genannten übergeordneten Zustand und dem genannten untergeordneten Zustand, wobei der genannte Übergang in den ge-nannten Speichermitteln ohne Änderung des genannten untergeordneten Zustandes gespeichert ist,
- Wenn der genannte berechnete Index kein bekannter Zustand des genannten Servers ist: Herstellung (115) eines neuen Zustandes und eines neuen Übergangs zwischen dem genannten übergeordneten Zustand und dem genannten untergeordneten Zustand, wobei die Identifizierung des genannten neuen Zustandes und des genannten Übergang in den genannten Speichermitteln gespeichert ist.

6. Verfahren gemäß einem der voranstehenden Ansprüche, bei dem die genannten Speichermittel einen Pufferspeicher beinhalten, der als Warteschlange wirkt, die zur Auf-nahme der genannten Videosequenzen vor ihrem Komprimieren geeignet ist, wobei das ge-nannte Verfahren die folgenden Stufen (112) umfasst:
- Wenn der genannte untergeordnete Zustand kein bekannter Zustand des genannten Servers ist: Berechnung der Größe der genannten, auszustrahlenden Videosequenz (301),
- Wenn die Größe der genannten Videosequenz einen vorbestimmten Schwellenwert unterschreitet und wenn die genannte Videosequenz sich nicht bereits in der genannten Warteschlange befindet oder in der Komprimierung begriffen ist: Komprimierung (303) der genannten Videosequenz und Ausstrahlung (304) durch den genannten Ser-ver auf das genannte Terminal der komprimierten, der genannten Videosequenz zuge-ordneten Daten zusätzlich zur Ausstrahlung des letzten Bildes der genannten, dem Übergang von dem genannten übergeordneten Zustand auf den genannten untergeordneten Zustand zugeordneten Videosequenz,
- Wenn die Größe der genannten Videosequenz den genannten vorbestimmten Schwel-lenwert übersteigt und wenn die genannte Videosequenz sich nicht in der genannten Warteschlange befindet oder in der Komprimierung begriffen ist: Einstellen (305) der genannten Sequenz in die Warteschlange zwecks ihrer Komprimierung und Ausstrah-lung durch den genannten Server zu dem genannten Terminal des letzten Bildes der genannten, dem Übergang von dem genannten übergeordneten Zustand auf den ge-nannten untergeordneten Zustand zugeordneten Videosequenz.

7. Verfahren gemäß Anspruch 4, bei dem die genannten Speichermittel geeignet sind, einen Index des Endbildes jedes Zustandes zu speichern und einen Pufferspeicher beinhalten, der als Warteschlange wirkt, die geeignet ist, die genannten Videosequenzen vor ihrer Komprimierung zu empfangen, wobei der genannte, der Herstellung eines neuen Übergangs zwischen dem genannten übergeordneten Zustand und dem genannten untergeordneten Zustand zugeordnete untergeordnete Zustand zunächst einmal einen beliebigen Wert an-nimmt, wobei das genannte Verfahren anschließend die folgenden Stufen umfasst:
- Berechnung der Größe der genannten, auszustrahlenden Videosequenz,
- Wenn die Größe der genannten Videosequenz einen vorbestimmten Schwellenwert unterschreitet und wenn die genannte Videosequenz sich nicht bereits in der genannten Warteschlange befindet oder in der Komprimierung begriffen ist: Komprimierung der genannten Videosequenz und Ausstrahlen durch den genannten Server zu dem genannten Terminal der komprimierten, der genannten Videosequenz zugeordneten Daten zusätzlich zur Ausstrahlung des letzten Bildes der genannten, dem Übergang von dem genannten übergeordneten Zustand auf den genannten untergeordneten Zustand zugeordneten Videosequenz,
- Wenn die Größe der genannten Videosequenz den genannten, vorbestimmten Schwel-lenwert übersteigt und wenn die genannte Videosequenz sich nicht in der genannten Warteschlange befindet oder in der Komprimierung begriffen ist: Einstellen der ge-nannten Sequenz in die Warteschlagen zwecks ihrer Komprimierung und Ausstrahlung durch den genannten Server zu dem genannten Terminal des letzten Bildes der ge-nannten, dem Übergang von dem genannten übergeordneten Zustand auf den ge-nannten untergeordneten Zustand zugeordneten Videosequenz,
- Berechnung eines dem Endbild der genannten Videosequenz zugeordneten Indexes und Überprüfung durch den genannten Server, dass der genannte Index ein in den ge-nannten Speichermitteln gespeicherter Index ist,
- Wenn der genannte Index des genannten Servers bekannt ist: Aktualisierung des Wer-tes des genannten beliebigen untergeordneten Zustandes, wobei der Übergang vom übergeordneten Zustand auf den aktualisierten untergeordneten Zustand in den genannten Speichermitteln ohne Änderung des genannten untergeordneten Zustandes gespeichert wird,
- Wenn der genannte, berechnete Index des genannten Servers nicht bekannt ist: Aktua-lisierung des Wertes des genannten, beliebigen untergeordneten Zustandes und Her-stellung eines neuen untergeordneten Zustandes, wobei die Identifizierung des ge-nannten neuen Zustandes und der Übergang zwischen dem übergeordneten Zustand und dem Zustand in den genannten Speichermitteln gespeichert ist.

8. Verfahren gemäß einem der voranstehenden Ansprüche, bei dem die genannten Speichermittel geeignet sind, um eine das Datum der letzten Nutzung der komprimierten, gespeicherten Daten angebende Variable zu speichern, wobei das genannte Verfahren eine Freigabestufe von Platz in den genannten Speichermitteln umfasst, wobei die genannte Freigabestufe realisiert ist, indem vorrangig die das älteste Datum der letzten Nutzung aufwei-senden komprimierten Daten gelöscht werden.

9. Verfahren gemäß einem der voranstehenden Ansprüche, umfassend eine Freigabe-stufe von Platz in den genannten Speichermitteln, wobei die genannte Freigabestufe in Ab-hängigkeit von der für die Komprimierung der komprimierten, in den genannten Speicher-mitteln notwendigen Zeit realisiert ist.

10. Verfahren gemäß einem der voranstehenden Ansprüche, **dadurch gekennzeichnet, dass** ein Teil der komprimierten Daten in in dem genannten Kundenterminal lokalisierten Speichermitteln gespeichert ist.

11. Verfahren gemäß einem der voranstehenden Ansprüche, **dadurch gekennzeichnet, dass** die Komprimierung der Daten durch den genannten Server gemäß der Norm H264 er-folgt.

12. Verfahren gemäß einem der voranstehenden Ansprüche, **dadurch gekennzeichnet, dass** die Komprimierung der Daten nur in abgeänderten Bereichen der Bilder der Videose-quenzen erfolgt.

## Claims

1. Procedure for the transmission of sequences of video data by a server to a client terminal through a network, which includes the following steps:
- generation (101) of a request by said client terminal following an event,
- sending (101) said request to said server, where said request includes an order to transmit a video sequence to said client terminal, where said video sequence forms a transition between a current state, the so-called the parent state, and a following state, the so-called the child state, where each state is associated with a final static image and where said server includes means for storage in memory which are suitable for storing:
○ an identifier for each state,
○ a table of transitions starting from each state,
○ compressed data which corresponds to a video sequence associated with a transition from one state to another,
- verification (102) by said server that said child state associated with said transmission order is a known state in said table of transitions starting from said parent state,
- if said child state is a known state of said server and if the compressed data stored in said means of storage in memory and which correspond to the video sequence associated with the transition from said parent state to said child state are available: transmission (103) of said compressed data by said server to said terminal,
- if said child state is a known state of said server and if the compressed data stored in said means of storage in memory and which correspond to the video sequence are not available: transmission (104) by said server to said terminal of at least the last image of said video sequence associated with the transition from said parent state to said child state,
- if said child state is not a known state of said server: transmission (113) by said server to said terminal of at least the last image of said video sequence associated with the transition from said parent state to said child state.

2. Procedure according to the preceding claim wherein said means of storage in memory include a buffer memory which acts as a queue which is capable of receiving said video sequences before they undergo compression, where said procedure includes the following steps (103):
- if said child state is a known state of said server and if the compressed data stored in said means of storage in memory and which correspond to the compression of the video sequence associated with the transition from said parent state to said child state are not available (201): verification (202) by the server whether said video sequence is present in the queue,
- if said video sequence is in said queue: transmission (104) by said server to said terminal of the last image of said video sequence associated with the transition from said parent state to said child state,
- if said video sequence is not in said queue: placing (203) of said sequence into the queue in order for it to undergo compression and transmission (104) by said server to said terminal of the last image of said video sequence associated with the transition from said parent state to said child state.

3. Process according to any of preceding claims wherein said means of storage in memory are suitable for storing an index of the final image of each state, where said procedure includes the following steps:
- if said child state is a known state of said server: calculation (105) of an index associated with the final image of said video sequence and comparison (106) of this calculated index with the index of the final image of the child state stored in said means of storage in memory,
- if the two indices are different: update (107) of the stored index of the final image and deletion of all compressed data associated with transition sequences which arrive and which leave from this child state.

4. Procedure according to one of the preceding claims which includes the following step: if said child state is not a known state of said server: creation of a new transition (111, 115) between said parent state and said child state, said transition being stored in said means for storage in memory without modification of said child state.

5. Procedure according to the preceding claim wherein said means of storage in memory are suitable for storing an index of the final image of each state, said procedure including the following steps:
- if said child state is not a known state of said server: calculation (109) of an index associated with the final image of said video sequence and verification by said server that said index is an index stored in said means of storage in memory,
- if said calculated index is known to said server: creation (111) of a new transition between said parent state and said child state, where said transition is stored in said means of storage in memory without modification of said child state,
- if said calculated index is not known to said server: creation (115) of a new state and of a new transition between said parent state and said child state, where the identifier of said new state and said transition is stored in said means of storage in memory.

6. Procedure according to one of the preceding claims wherein said means of storage in memory include a buffer memory acting as a queue which is suitable for receiving said video sequences before they undergo compression, where said procedure includes the following steps (112):
- if said child state is not a known state of said server: calculation of the size of said video sequence to be transmitted (301),
- if the size of said video sequence is less than a predetermined threshold and if said video sequence is not already in said queue or undergoing compression: compression (303) of said video sequence and transmission (304) by said server to said terminal of the compressed data associated with said video sequence in addition to the transmission of the last image of said video sequence associated with the transition from said parent state to said child state.
- if the size of said video sequence is greater than said predetermined threshold and if said video sequence is not in said queue or undergoing compression: placing (305) of said sequence in the queue in order for it to undergo compression and distribution by said server to said terminal of the last image of said video sequence associated with said transition from said parent state to said child state.

7. Procedure according to claim 4 wherein said means of storage in memory are suitable for storing an index of the final image of each state and include a buffer memory which acts as a queue suitable for receiving the said video sequences before they undergo compression, where said child state associated with the creation of a new transition between said parent state and said child state initially takes any value whatsoever, with the procedure then including the following steps:
- calculation of the size of said video sequence to be transmitted
- if the size of said video sequence is less than a predetermined threshold and if said video sequence is not already in said queue or undergoing compression: compression of said video sequence and transmission by said server to said terminal of the compressed data associated with said video sequence in addition to the transmission of the last image of said video sequence associated with the transition from said parent state to said child state,
- if the size of said video sequence is greater than said predetermined threshold and if said video sequence is not in said queue or undergoing compression: placing of said sequence in the queue in order for it to undergo compression and transmission by said server to said terminal of the last image of said video sequence associated with the transition from said parent state to said child state,
- calculation of an index associated with the final image of said video sequence and verification by said server that said index is an index stored in said means of storage in memory,
- if said calculated index is known to said server: update of the value of said child state, where the transition from the parent state to the updated child state is stored in said means of storage in memory without modification of said child state,
- if said calculated index is not known to said server: update of the value of said child state and creation of a new child state, with the identifier of said new state and the transition between the parent state and the state being stored in the means of storage in memory.

8. Procedure according to one of the preceding claims wherein said means of storage in memory are suitable for storing a variable which indicates the date of the last use of the stored compressed data, where said procedure includes a step for freeing space in said means of storage in memory, with said step for freeing space being carried out by giving priority to deletion of compressed data which exhibits the oldest date of last use.

9. Procedure according to one of the preceding claims which includes a step for freeing space in said means of storage in memory, said step for freeing space being carried out as a function of the time required for the compression of the compressed data stored in said means of storage in memory.

10. Procedure according to one of the previous claims **characterised in that** a part of the compressed data is stored in means of storage in memory which are located in said client terminal.

11. Procedure according to one of the previous claims **characterised in that** the compression of data by said server is carried out in accordance with standard H264.

12. Procedure according to one of the preceding claims **characterised in that** the compression of the data is only carried out on the modified zones of the video sequence images.
